# EUROPÄISCHE PATENTANMELDUNG

(11) **EP 1 439 400 A2**
(43) Veröffentlichungstag der Anmeldung: **21.07.2004**
(21) Anmeldenummer: 03450276.5
(22) Anmeldetag: 10.12.2003
(51) Int. Cl.: G01S 3/02, G01S 3/04, G01S 3/14, A63B 29/02

(54) **Suchgerät mit drei orthogonalen Ferrit-Stabantennen, insbesonders zur Ortung verschütteter Personen in Lawinen, sowie Verfahren zum Unterscheiden verschiedener Empfangssignale**

(30) Priorität: 15.01.2003 AT 472003
(71) Anmelder: Seidel Elektronik GmbH Nfg. KG, 8530 Deutschlandsberg (AT)
(72) Erfinder: Sackl, Rudolf, 8530 Deutschlandsberg (AT)
(74) Vertreter: Laminger, Norbert

(57) **Zusammenfassung**

Ein Suchgerät, insbesonders zur Ortung verschütteter Personen in Lawinen, unter Geröll oder eingestürzten Gebäuden, ist mit einer Empfangseinheit (6-13) für die Signale von Sendeeinheiten, vorzugsweise auch mit einer Sendeeinheit (13,14), ausgestattet, welche Empfangseinheit mit drei vorzugsweise orthogonal angeordneten Ferrit-Stabantennen (2,3,4) verbunden ist, sowie mit optischen (6) und/oder akustischen (12) Anzeigeeinrichtungen.

Um eine kompakte Dimensionierung zu gewährleisten, sind alle Antennen (2,3,4) zusammen mit der Empfangseinheit (6-13), vorzugsweise auch der Sendeeinheit (13,14), in einem kompakten Gehäuse (1) untergebracht sind, wobei eine Antenne (4) eine wesentlich geringere Lange autweist als die beiden anderen Antennen (2,3).

Vorzugsweise ist dabei vorgesehen, dass die Empfangseinheit ein DSP-Modul (11) für die Empfangssignale der Antennen (2,3,4) aufweist.

## Beschreibung

Suchgerät, insbesonders zur Ortung verschütteter Personen in Lawinen, unter Geröll oder eingestürzten Gebäuden, mit einer Empfangseinheit für die Signale von Sendeeinheiten, vorzugsweise auch einer Sendeeinheit, welche Empfangseinheit mit drei vorzugsweise orthogonal angeordneten Ferrit-Stabantennen verbunden ist, sowie optischen und/oder akustischen Anzeigeeinrichtungen, sowie Verfahren zum Betreiben eines Suchgerätes, insbesonders zur Ortung verschütteter Personen in Lawinen, unter Geröll oder eingestürzten Gebäuden, bei dem von einer Empfangseinheit eingehende Signale eines oder mehrerer Sendeeinheiten überwacht werden.

Die gegenwärtigen tragbaren Verschütteten-Suchgeräte verfügen über Einrichtungen die es erlauben, die Größe und eventuell auch Richtung der magnetischen Feldstärke eines Senders festzustellen und anzuzeigen. Diese Anzeige wird dazu benützt, entlang der Feldlinien bis zum Verschütteten vorzudringen. Meist werden dazu ein oder zwei Ferrit-Empfangsantennen vorgesehen, die zusammen mit der Verarbeitungselektronik und Anzeigeeinrichtungen in einem gemeinsamen Gehäuse eingebaut sind, wobei die dabei möglichen Stablängen die Reichweite beschränken und bei zwei Antennen auch die genaue Punktortung erschwert ist. Aufgrund der Feldlinienverteilung bei der Ferrit-Sendeantenne kann der Retter bei der Suche für die Punktortung in Positionen kommen, in denen die Feldstärke vollständig vertikal orientiert und in der horizontalen Ebene gleich Null ist. Unerfahrene Retter können in diesem Fall die genaue Lage des Verschütteten nicht feststellen. In solchen Fällen sind auch Geräte mit einer "virtuellen" dritten Antenne, etwa wie in der EP 0 855 600 A2 beschrieben, zwecklos. Andererseits sind Geräte mit drei gleichen, vorzugsweise orthogonal orientierten, realen Antennen, beispielsweise wie in der EP 0 733 916 A2 geoffenbart, zu klobig und unhandlich oder ― bei kompakter Bauweise - weisen eine zu geringe Reichweite für eine sinnvolle Suche auf.

Die Aufgabe der vorliegenden Erfindung war daher ein Gerät der eingangs angegebenen Art, welches in einfacher Weise eine möglichst bedienungsfehlerunanfällige genaue Ortung des Verschütteten über möglichst große Reichweite ermöglicht und dennoch derart kompakt dimensioniert ist, dass es ohne die Bewegungsfreiheit des Trägers einzuschränken von diesem bei der Suche und anderen Aktivitäten mitgeführt werden kann. Eine weitere Aufgabe der Erfindung war weiters ein Verfahren zum Betreiben eines derartigen Gerätes, mit dem in einfacher und sicherer Weise die Lokalisation von mehreren verschütteten Opfern nacheinander möglich ist.

Zur Lösung der ersten Aufgabe ist erfindungsgemäß vorgesehen, daß alle Antennen zusammen mit der Empfangseinheit, vorzugsweise auch der Sendeeinheit, in einem kompakten Gehäuse untergebracht sind, wobei eine Antenne eine wesentlich geringere Länge aufweist als die beiden anderen Antennen. Diese kurze dritte Antenne reicht schon aus, um im Nahbereich des Senders eine dreidimensionale Ortung zu ermöglichen, und dadurch den Suchenden an den Positionen mit der vertikalen Feldorientierung nicht zu verwirren, sondern direkt zu jener Stelle zu führen, wo sich der Verschüttete befindet. Überdies trägt diese Antenne, ohne aber aufgrund ihrer kurzen Abmessungen die Dimensionen des Gerätes unnötig groß zu machen, auch zur Erhöhung der Signalstärke des empfangenen Signals im Nahbereich bei.

Vorteilhafterweise ist gemäß einer bevorzugten Ausführungsform des erfindungsgemäßen Gerätes vorgesehen, daß die kürzeste Antenne maximal halb so lang ist wie die längste Antenne des Suchgerätes, vorzugsweise etwa ein Viertel der Länge der längsten Antenne aufweist.

Gemäß einem weiteren Merkmal der Erfindung weist die Empfangseinheit ein DSP-Modul für die Empfangssignale der Antennen auf. In einiger Entfernung zum Verschütteten ist das empfangene Signal sehr gering und durch das Rauschen kaum noch erkennbar. Mittels eines DSPs kann das extrem geringe Sendesignal im verrauschten Eingangssignal erkannt und dadurch die Reichweite stark erhöht werden.

Vorteilhafterweise ist dabei vorgesehen, daß die Empfangseinheit eine Untereinheit zur Transformation der Empfangssignale mittels schneller Fouriertransformation beinhaltet, welche Untereinheit vorzugsweise in das DSP-Modul integriert ist.

Gemäß einem weiteren Merkmal der Erfindung können Zusatzgeräte, wie vorzugsweise Höhenmesser, Thermometer oder Kompaß, integriert sein, die dem Suchenden Zusatzinformationen im Zuge der Rettungsaktion geben können.

Die zweite gestellte Aufgabe wird erfindungsgemäß dadurch gelöst, dass über einen vorbestimmten Zeitraum alle empfangenen Empfangssignale und zumindest eine unterscheidungskräftige Charakteristik dieser Empfangssignale registriert werden und die Empfangseinheit dann mithilfe dieser Charakteristik auf eines dieser Empfangssignale eingestellt wird. Durch diese Merkmale wird eine sichere und rasche Suche auch für den Fall von mehreren Verschütteten, die sich innerhalb des Empfangsbereiches befinden, ermöglicht, ohne dass der Suchende durch die Vielzahl der empfangenen Signale irregeleitet werden kann. Die Erkennung von mehreren Sendern und die Bestimmung von deren Anzahl ist aufgrund der normierten Signalcharakteristik der Lawinenverschüttetensuchgeräte möglich, deren Sender typischerweise 100ms mit konstanter Sendefrequenz sendet und dann mindestens 400ms Pause macht. Wenn innerhalb der definierten Pause ein Sendesignal kommt, oder der empfangene Impuls zeitlich eine bestimmte Breite überschreitet oder die Impulse eine stark unterschiedliche Amplitude aufweisen, sind dies Anzeichen für das Vorhandensein von mehr als einem Sender im Empfangsbereich des Gerätes des Suchenden. Aufgrund der vorgegebenen Toleranzen der Sender kommt es für unterschiedliche Sendegeräte zu geringfügig unterschiedlichen Signalcharakteristika und anhand dieser Unterschiede erkennt der Empfänger, welche Signalimpulse von ein und demselben Sender kommen. Charakteristika zur Senderzuordnung können die gesamte Periodendauer, die Sendezeit, Pausendauer, Amplitude oder die Sendefrequenz sein. Der Empfänger wählt nun automatisch oder auf Bestätigung durch den Benutzer des Gerätes einen Sender aus, d.h. er führt eine Synchronisation auf diesen einen Sender aus. Weiters kann vorgesehen sein, dass er die Anzahl der weiteren, vorhandenen Sender (Verschütteten) anzeigt.

Vorteilhafterweise ist dabei vorgesehen, daß als unterscheidungskräftige Charakteristik die Signalstärke bzw. Amplitude des Empfangssignals herangezogen wird. Diese Größe ist sehr einfach zu bestimmen und gestattet die rasche Einstellung des Gerätes auf ein bestimmtes empfangenes Signal.

Nachdem trotz genereller Festlegung über die Signalcharakteristik aufgrund von Toleranzen und anderer Einflüsse auf die Sender immer Unterschiede zwischen einzelnen Sender und damit auch Sendesignalen bestehen, kann gemäß einer zusätzlichen oder alternativen Ausführungsform des Verfahrens auch als unterscheidungskräftige Charakteristik die Impulsdauer bzw. Sendezeit des Empfangssignals herangezogen werden.

Gleiches gilt auch für die Frequenz der Signale, welche normgemäß auf 457 kHz festgesetzt ist, von welchem Wert aber ebenfalls geringe Abweichungen auftretend, so dass als unterscheidungskräftige Charakteristik auch die Frequenz des Empfangssignals herangezogen werden kann.

Wenn gemäß einem weiteren Merkmal der Erfindung nach Eingang eines Steuersignals in der Empfangseinheit die bislang überwachten Empfangssignale ausgefiltert werden, kann nach erfolgreicher Lokalisierung des Senders des überwachten Empfangssignals die sichere Suche nach einem der weiteren vorhandenen Sender eingeleitet werden. Durch den Suchenden kann das Gerät derart umgeschaltet werden, dass das Signal mit der bisher synchronisierten Charakteristik ausgefiltert wird, sodaß die Synchronisation auf einen anderen Sender und damit die Suche nach dem nächsten Verschütteten möglich wird.

Vorteilhafterweise wird auch dabei die Empfangseinheit dann mithilfe der unterscheidungskräftigen Charakteristik auf eines der verbleibenden Empfangssignale eingestellt.

Vorzugsweise und mit dem Vorteil der optimalen Signalerkennung und auch Signalunterscheidung bei mehreren vorhandenen Sendern, d.h. bei der Mehrfachverschüttetensuche, ist gemäß einem weiteren Merkmal der Erfindung vorgesehen, daß die Charakteristik der Signale mittels schneller Fouriertransformation bestimmt wird.

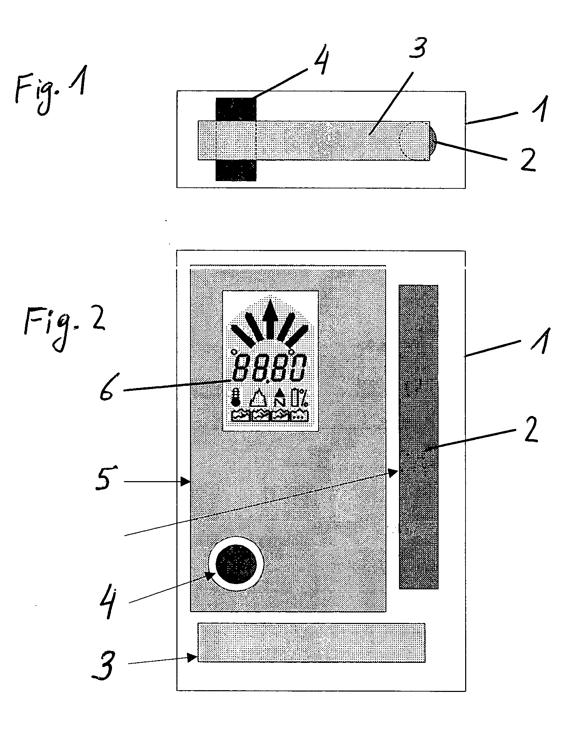

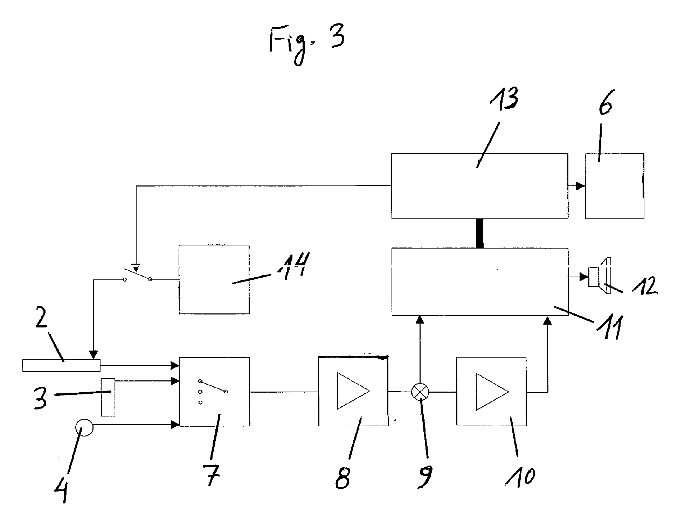

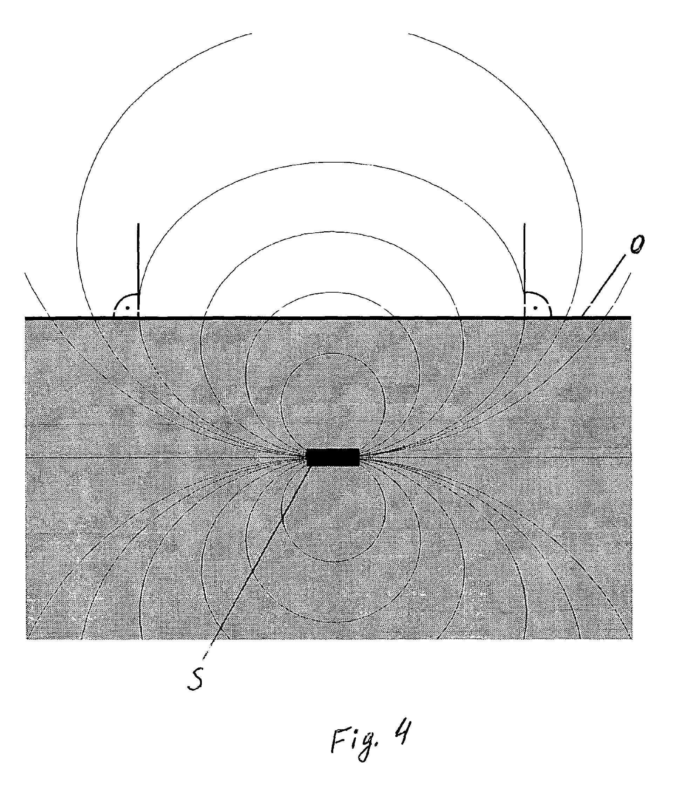

In der nachfolgenden Beschreibung soll die Erfindung anhand der beigefügten Zeichnungen näher erläutert werden, wobei die Fig. 1 eine schematische Vorderansicht eines Ausfuhrungsbeispiels für das erfindungsgemäße Gerät zeigt, die Fig. 2 eine schematische Draufsicht auf das Gerät der Fig. 1 ist, Fig. 3 ein vereinfachtes Blockschaltbild des erfindungsgemäßen Gerätes ist, und Fig. 4 den Feldlinienverlauf bei horizontal liegender Sendeantenne darstellt.

Im Gehäuse 1 des erfindungsgemäßen Suchgerätes befinden sich drei Ferrit-Antennen 2, 3 und 4. Diese sind vorzugsweise orthogonal zueinander und auch vorzugsweise, um die kompakte und von der Form her übliche Dimensionierung des Gehäuses 1 zu ermöglichen, unterschiedlich lang. Während die beiden längeren Antennen 2, 3 Längen von ca. 8 cm bzw. 6 cm aufweisen, ist die kürzeste Antenne 4 maximal halb so lang ist wie die längste Antenne 2 des Suchgerätes. Vorzugsweise ist die Länge der Antenne 4 etwa ein Viertel der Länge der längsten Antenne 2, in absoluten Zahlen sind das ca. 2 cm.

Wie in Fig. 2 zu erkennen ist, liegen die beiden längeren Antennen 2, 3 im wesentlichen parallel zur Längs- bzw. Breitseite einer Leiterplatte 5, welche die Empfangs- und auch Sendeelektronik beinhaltet und auf welcher Leiterplatte 5 auch die optische Anzeigeeinheit 6 angebracht ist. Auf diese Anzeigeeinheit 6 sind ansteuerbare Symbole für beispielsweise die Richtung und Entfernung des empfangenen Senders, allenfalls noch zusätzliche Informationen wie die Anwesenheit weiterer Sender, über Temperatur, Höhe, Himmelsrichtung, Batteriezustand, usw. vorgesehen. Die Anwesenheit weiterer Sender kann wie weiter unten beschrieben festgestellt werden, während andere Angaben über im Gerät zusätzlich vorhandene, vorzugsweise elektronische Einheiten wie Thermometer, Höhenmesser oder Kompass beigesteuert werden.

Die dritte, kürzeste Antenne 4 ist vorzugsweise durch eine Bohrung in der Leiterplatte 5 hindurchgeführt.

Die grundlegende elektronische Schaltung ist anhand des Blockschaltbildes der Fig. 3 zu ersehen, in welchem nicht die Erfindung betreffende, jedem Fachmann geläufige Baugruppen der Klarheit halber nicht dargestellt wurden. So ist beispielsweise klar, dass die Symbole für die Antennen 2, 3, 4 natürlich auch die zugehörigen Schwingkreise und ähnliche Baugruppen beinhalten. Die Antennen 2, 3, 4 sind einzeln mit einem Antennen-Umschalter 7 verbunden, welcher bei Empfangsbetrieb des Gerätes abwechselnd zwischen den Antennen 2, 3, 4 umschaltet und das Signal jeweils einer der Antennen weiterleitet. Hinter dem Antennen-Umschalter 7 ist ein erster Verstärker 8 vorgesehen, von dem das Signal weiter über einen Mischer 9 in einen zweiten Verstärker 10 gelangt.

Ein Ausgang des Mischers 9 als auch der Ausgang des Verstärkers 10 sind mit dem digitalen Signalprozessor-Modul 11 verbunden. Direkt an dieses DSP-Modul 11, das aus dem eigentlichen digitalen Signalprozessor selbst und dessen Peripherie besteht, und der vorzugsweise zur Signalverarbeitung mittels schneller Fourier-Transformation (FFT) ausgelegt ist, kann eine Audiosignal-Ausgabeeinheit 12 angeschlossen sein.

In jedem Fall ist aber eine ― bereits in Fig. 2 dargestellte ― optische Anzeigeeinheit 6 vorhanden, die von einem Mikrocontroller 13 angesteuert wird, welcher mit dem DSP-Modul 11 gekoppelt ist. Der Mikrocontroller 13 steuert aber auch einen Schalter an, der einen vorzugsweise vorhandenen Sende-Oszillator 14 mit vorzugsweise der längsten Antenne 2 verbindet, wenn das Gerät im Sende-Modus betrieben werden soll.

Das Suchgerät wird üblicherweise parallel zur Schneeoberfläche O gehalten und bei Annäherung an den Sender steigt die über hauptsächlich die längeren Antennen 2, 3 aufgenommene Feldstärke immer mehr an. Für den unglücklichen Fall, dass die Sendeantenne S waagrecht im Schnee liegt (siehe Fig. 4), steigt die Feldstärke bei Annäherung ebenfalls immer mehr an, die Richtung der Feldlinien dreht sich jedoch immer mehr von waagrecht auf senkrecht und anschließend (unmittelbar über der Sendeantenne) wieder auf waagrecht.

Für einen unerfahrenen Sucher, der sein Empfangsgerät üblicherweise in waagrechten Lage hält, wo also die beiden längeren Antennen 2 und 3 ebenfalls horizontal bezüglich der Schneeoberfläche O orientiert sind, sieht das so aus:
- Feldstärke steigt bei Annäherung an (=Entfemungsangabe am Display 6 wird geringer)
- irgendwann wird dann aufgrund der Drehung der Feldlinien die horizontale Komponente des Feldes geringer und die Entfernungsanzeige steigt wieder an.

Ein unerfahrener Sucher glaubt daher, dass sich der Verschüttete unter diesem Feldstärkemaximum (Distanzanzeigenminimum) befindet, während ein geübter Benutzer sicherheitshalber ein paar Meter in der gleichen Richtung weitergeht, um festzustellen, ob sich nach dem Abfall der Feldstärke ein noch größeres Maximum befindet. Wenn ja, dann wird dort mit der Lawinensonde manuell gesucht und gegraben.

Mit der kleinen dritten Antenne 4 kann im Nahbereich der Sendeantenne S, in welchem allein das Problem mit dem falschen Maximum (Minimum) durch die senkrechten Feldlinien besteht, das Feld dreidimensional gemessen werden, weil im Nahbereich des Senders die Senderfeldstärke so groß ist, dass die kurze dritte Antenne 4 eine ausreichende Signalkomponente zur dreidimensionalen Darstellung beisteuern kann. Daher führt das erfindungsgemäße Gerät auch einen ungeübten Benutzer sicher und bedienungsfehlerunanfällig eindeutig und direkt zu jener Stelle, wo sich der Sender und damit der Verschüttete befindet (Feldstärkemaximum - geringste Distanzanzeige).

## Patentansprüche

1. Suchgerät, insbesonders zur Ortung verschütteter Personen in Lawinen, unter Geröll oder eingestürzten Gebäuden, mit einer Empfangseinheit für die Signale von Sendeeinheiten, vorzugsweise auch einer Sendeeinheit, welche Empfangseinheit mit drei vorzugsweise orthogonal angeordneten Stabantennen verbunden ist, sowie optischen und/oder akustischen Anzeigeeinrichtungen, **dadurch gekennzeichnet, daß** alle Antennen (2, 3, 4) zusammen mit der Empfangseinheit (6 - 13), vorzugsweise auch der Sendeeinheit (13, 14), in einem kompakten Gehäuse (1) untergebracht sind, wobei eine Antenne (4) eine wesentlich geringere Länge aufweist als die beiden anderen Antennen (2, 3).

2. Suchgerät nach Anspruch 1, **dadurch gekennzeichnet, daß** die kürzeste Antenne (4) maximal halb so lang ist wie die längste Antenne (2) des Suchgerätes, vorzugsweise etwa ein Viertel der Länge der längsten Antenne (2) aufweist.

3. Suchgerät nach Anspruch 1 oder 2, **dadurch gekennzeichnet, daß** die Empfangseinheit ein DSP-Modul (11) für die Empfangssignale der Antennen (2, 3, 4) aufweist.

4. Suchgerät nach Anspruch 3, **dadurch gekennzeichnet, daß** die Empfangseinheit eine Untereinheit zur Transformation der Empfangssignale mittels schneller Fouriertransformation beinhaltet, welche Untereinheit vorzugsweise in das DSP-Modul (11) integriert ist.

5. Suchgerät nach einem der Ansprüche 1 bis 4, **dadurch gekennzeichnet, daß** Zusatzgeräte, wie vorzugsweise Höhenmesser, Thermometer oder Kompaß, integriert sind.

6. Verfahren zum Betreiben eines Suchgerätes, insbesonders zur Ortung verschütteter Personen in Lawinen, unter Geröll oder eingestürzten Gebäuden, bei dem von einer Empfangseinheit eingehende Signale eines oder mehrerer Sendeeinheiten überwacht werden, **dadurch gekennzeichnet, dass** über einen vorbestimmten Zeitraum alle empfangenen Empfangssignale und zumindest eine unterscheidungskräftige Charakteristik dieser Empfangssignale registriert werden und die Empfangseinheit dann mithilfe dieser Charakteristik auf eines dieser Empfangssignale eingestellt wird.

7. Verfahren nach Anspruch 6, **dadurch gekennzeichnet, daß** als unterscheidungskräftige Charakteristik die Periodendauer des Empfangssignals herangezogen wird.

8. Verfahren nach Anspruch 6 oder 7, **dadurch gekennzeichnet, daß** als unterscheidungskräftige Charakteristik die Impulsdauer bzw. Sendezeit des Empfangssignals herangezogen wird.

9. Verfahren nach einem der Ansprüche 6 bis 8, **dadurch gekennzeichnet, daß** als unterscheidungskräftige Charakteristik die Pausendauer des Empfangssignals herangezogen wird.

10. Verfahren nach einem der Ansprüche 6 bis 9, **dadurch gekennzeichnet, daß** als unterscheidungskräftige Charakteristik die Signalstärke bzw. Amplitude des Empfangssignals herangezogen wird.

11. Verfahren nach einem der Ansprüche 6 bis 10, **dadurch gekennzeichnet, daß** als unterscheidungskräftige Charakteristik die Frequenz des Empfangssignals herangezogen wird.

12. Verfahren nach einem der Ansprüche 6 bis 11, **dadurch gekennzeichnet, daß** nach Eingang eines Steuersignals in der Empfangseinheit die bislang überwachten Empfangssignale ausgefiltert werden.

13. Verfahren nach Anspruch 12, **dadurch gekennzeichnet, daß** die Empfangseinheit dann mithilfe der unterscheidungskräftigen Charakteristik auf eines der verbleibenden Empfangssignale eingestellt wird.

14. Verfahren nach einem der Ansprüche 6 bis 13, **dadurch gekennzeichnet, daß** die Charakteristik der Signale mittels schneller Fouriertransformation bestimmt wird.
